(19) **Europäisches Patentamt**
**European Patent Office**
**Office européen des brevets**

(11) **EP 4 664 741 A1**

(12) **EUROPEAN PATENT APPLICATION**

(43) Date of publication:
**17.12.2025 Bulletin 2025/51**

(21) Application number: **25182700.2**

(22) Date of filing: **13.06.2025**

(51) International Patent Classification (IPC):
**H02M 1/12** (2006.01)    **H02M 1/44** (2007.01)
**H02M 3/00** (2006.01)    **H02M 7/48** (2007.01)

(52) Cooperative Patent Classification (CPC):
**H02M 1/123; H02M 1/44; H02M 3/01;**
**H02M 7/4815;** H02M 1/0058; H02M 3/33573

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **13.06.2024 US 202463659712 P**

(71) Applicant: **Delta Electronics, Inc.**
**Neihu, Taipei 11491 (TW)**

(72) Inventors:
• **Phukan, Ripun**
  **Morrisville, NC 27560 (US)**
• **Barbosa, Peter Mantovanelli**
  **Morrisville, NC 27560 (US)**

(74) Representative: **Uexküll & Stolberg**
**Partnerschaft von**
**Patent- und Rechtsanwälten mbB**
**Beselerstraße 4**
**22607 Hamburg (DE)**

(54) **RESONANT CONVERTER**

(57)    A resonant converter (1, 1a, 1b) is provided. The resonant converter (1, 1a, 1b) includes a DC common mode choke (3) and a resonant tank (4, 4a). The DC common mode choke (3) includes two capacitive components (Cp1, Cp2, Cp3, Cp4, Cp5, Cp6). The resonant inductor group (41) includes a first resonant inductor (411) and a second resonant inductor (412). The first resonant inductor (411) and the second resonant inductor (412) are equal. Two sides of the resonant capacitor group (42) are connected with the first resonant inductor (411) and the second resonant inductor (412), respectively. The resonant capacitor group (42) includes two resonant capacitors (C4) in series. A balancing condition is met when a first ratio between two inductances of the DC common mode choke (3) and the first resonant inductor (411) and a second ratio between capacitances of the two capacitive components (Cp1, Cp2, Cp3, Cp4, Cp5, Cp6) are equal.

FIG. 1

**Description**

FIELD OF THE INVENTION

The present disclosure relates to a converter, and more particularly to a resonant converter.

BACKGROUND OF THE INVENTION

The single phase LCL-T resonant converter provides wide gain range operation with full range zero voltage switching (ZVS) on the primary converter and the secondary converter. The LCL-T resonant converter based on the immittance provides significant advantages on controlling, starting up and advancing light load efficiency. The primary side of the LCL-T resonant converter utilizes a stacked half bridge inverter to balance voltage at input terminal of the DC-link for modulating the period doubling.

However, the period doubling modulation along with the presence of parasitic capacitances caused by the active device and the passive component of the LCL-T resonant converter leads to significant common mode conducted emissions at the input terminal of the DC-link. Eventually, these components are detected at the front end of the power factor correction circuit during qualification testing stage so as to add bulky LC filters at the front end. Consequently, the LCL-T resonant converter has disadvantage of increasing volume and cost and reducing the efficiency and the EMI performance.

Therefore, there is a need of providing a resonant converter to obviate the drawbacks encountered from the prior arts.

SUMMARY OF THE INVENTION

The present disclosure provides a resonant converter having advantage of reducing the noise emission and the volume and increasing the power density and the efficiency.

In accordance with an aspect of the present disclosure, a resonant converter is provided. The resonant converter converts an input voltage from a power source to an output voltage. The resonant converter includes a DC common mode choke and a resonant tank. The DC common mode choke includes at least two capacitive components. The resonant tank is connected with the DC common mode choke. The resonant tank includes a resonant inductor group and a resonant capacitor group. The resonant inductor group includes a first resonant inductor and a second resonant inductor. The first resonant inductor and the second resonant inductor are equal. A first side of the resonant capacitor group is connected with the first resonant inductor. A second side of the resonant capacitor group is connected with the second resonant inductor. The resonant capacitor group includes two resonant capacitors in series. A balancing condition is met when a first ratio between two inductances of the DC common mode choke and the first resonant inductor and a second ratio between capacitances of the at least two capacitive components are equal.

In an aspect of the present disclosure, the at least two capacitive components are parasitic capacitors.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 is a schematic circuit diagram illustrating a resonant converter according to a first embodiment of the present disclosure;
FIG. 2A and 2B are schematic equivalent circuit diagrams illustrating the resonant converter of FIG. 1;
FIG. 3A is a schematic circuit diagram illustrating a resonant converter according to a second embodiment of the present disclosure;
FIGS. 3B to 3F are schematic circuit diagram illustrating embodiments of the elements of the resonant converter of FIG. 3A;
FIG. 4A and 4B are schematic equivalent circuit diagrams illustrating the resonant converter of FIG. 3A;
FIG. 4C is a schematic Wheatstone bridge equivalent circuit diagrams illustrating the resonant converter of FIG. 3A;
FIG. 5A is a schematic circuit diagram illustrating a resonant converter according to a third embodiment of the present disclosure;
FIG. 5B is a schematic Wheatstone bridge equivalent circuit diagrams illustrating the resonant converter of FIG. 5A;
FIG. 5C is schematic equivalent circuit diagram illustrating a resonant converter according to a fourth embodiment of the present disclosure;

FIG. 6 is schematic waveform diagram of the voltage gain and the frequency of the resonant converter of the present disclosure and the conventional resonant converter;

FIG. 7 is schematic waveform diagram of the voltage and current direction of partial structure of the resonant converter of FIG. 3A;

FIG. 8A and 8B are realistic structures of the transformer and the shielding connection structure of the resonant converter of FIG. 3A;

FIGS. 9A and 9B are schematic noise waveform diagrams of the resonant converter of the present disclosure and the conventional resonant converter;

FIG. 10 is schematic frequency waveform diagram of the inductor of the resonant converter of the present disclosure;

FIG. 11 is realistic structure of the resonant converter of the present disclosure; and

FIG. 12 is schematic waveform diagram of the common mode noise of the resonant converter of the present disclosure and the conventional resonant.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

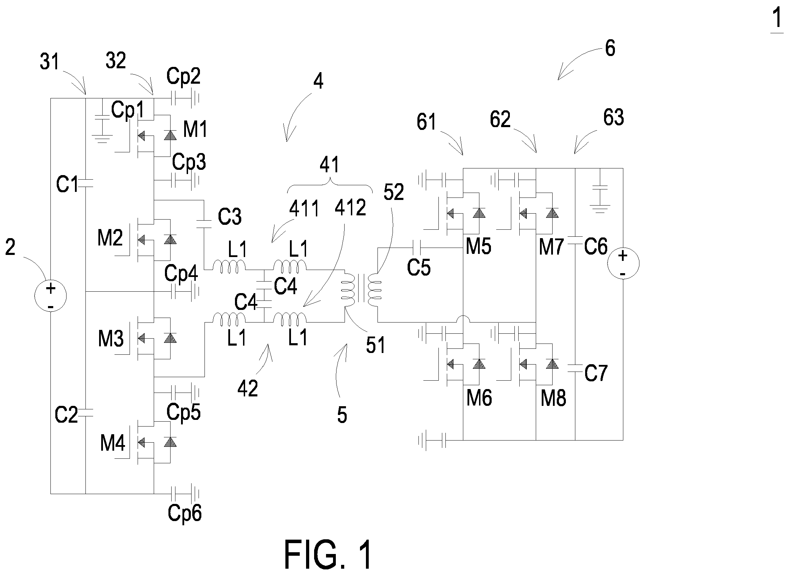

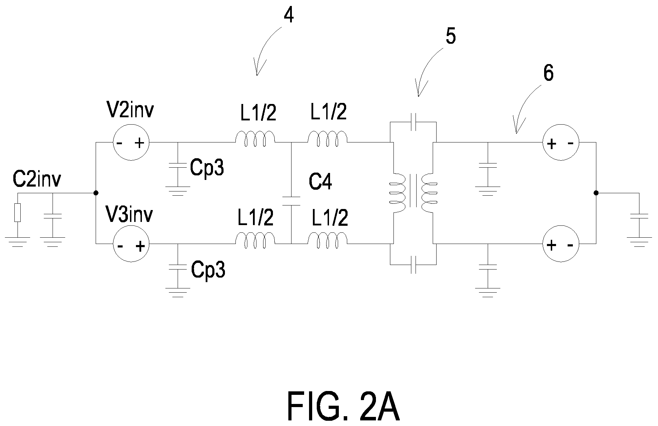

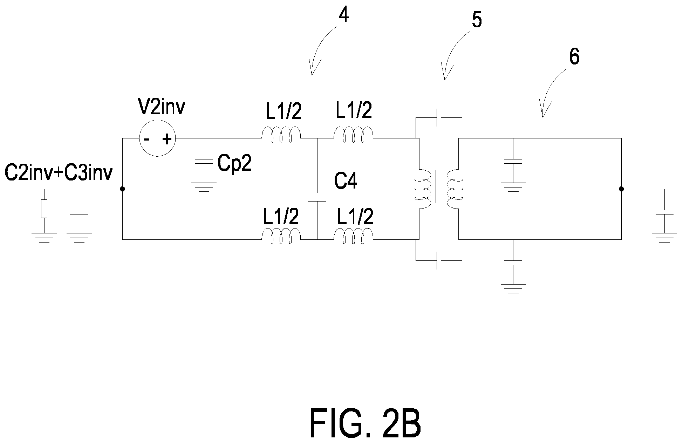

FIG. 1 is a schematic circuit diagram illustrating a resonant converter according to a first embodiment of the present disclosure. FIG. 2A and 2B are schematic equivalent circuit diagrams illustrating the resonant converter of FIG. 1. As shown in FIG. 1, the resonant converter 1 is an LCL-T structure and converts an input voltage from a power source 2 to an output voltage. The resonant converter 1 includes a resonant tank 4, a transformer 5, an inverter, and a rectifier circuit 6.

The inverter includes a first bridge arm 31, a second bridge arm 32 and, at least two capacitive components. The first bridge arm 31 is connected with the power source 2 in parallel and includes two capacitors C1, C2. The two capacitors C1, C2 are connected in series. The second bridge arm 32 is connected with the first bridge arm 31 in parallel and includes four transistors. In this embodiment, the four transistors include a first transistor M1, a second transistor M2, a third transistor M3 and a fourth transistor M4. The four transistors M1, M2, M3, M4 are connected in series. In the embodiment, the capacitive components include a first capacitive component Cp1, a second capacitive component Cp2, a third capacitive component Cp3, a fourth capacitive component Cp4, a fifth capacitive component Cp5, and a sixth capacitive component Cp6. The first capacitive component Cp1, the second capacitive component Cp2, the third capacitive component Cp3, the fourth capacitive component Cp4, the fifth capacitive component Cp5, and the sixth capacitive component Cp6 play crucial roles in forming a DC common mode choke.

In some embodiments, at least one of the first capacitive component Cp1, the second capacitive component Cp2, the third capacitive component Cp3, the fourth capacitive component Cp4, the fifth capacitive component Cp5, and the sixth capacitive component Cp6 is a parasitic capacitor. In the present embodiment, the first capacitive component Cp1, the second capacitive component Cp2, the third capacitive component Cp3, the fourth capacitive component Cp4, the fifth capacitive component Cp5, and the sixth capacitive component Cp6 are all parasitic capacitors. In the following description, the term "first capacitive component Cp1" and "first parasitic capacitor Cp1" may be used interchangeably, the term "second capacitive component Cp2" and "second parasitic capacitor Cp2" may be used interchangeably, the term "third capacitive component Cp3" and "third parasitic capacitor Cp3" may be used interchangeably, the term "fourth capacitive component Cp4" and "fourth parasitic capacitor Cp4" may be used interchangeably, the term "fifth capacitive component Cp5" and "fifth parasitic capacitor Cp5" may be used interchangeably, the term "sixth capacitive component Cp6" and "sixth parasitic capacitor Cp6" may be used interchangeably, and other similar terms shall be interpreted in the same manner accordingly.

The first parasitic capacitor Cp1 and the second parasitic capacitor Cp2 are connected with a first end of the first bridge arm 31 and the first transistor M1. The third parasitic component Cp3 is connected with a middle point between the first transistor M1 and the second transistor M2. The fourth parasitic component Cp4 is connected with a middle point between the second transistor M2 and the third transistor M3. The fifth parasitic component Cp5 is connected with a middle point between the third transistor M3 and the fourth transistor M4. The sixth parasitic component Cp6 is connected with a second end of the first bridge arm 31 and the fourth transistor M4.

The resonant tank 4 is configured to be a symmetrical structure. The resonant tank 4 includes a resonant inductor group 41, a resonant capacitor group 42 and a blocking capacitor C3. The resonant inductor group 41 includes a first resonant inductor 411 and a second resonant inductor 412. The first resonant inductor 411 and the second resonant inductor 412 are equal and include two resonant inductors L1, respectively. A first side of the resonant capacitor group 42 is connected with a middle point between the two resonant inductors L1 of the first resonant inductor 411. A second side of the resonant capacitor group 42 is connected with a middle point between the two resonant inductors L1 of the second resonant inductor 412. The resonant capacitor group 42 includes two resonant capacitors C4 in series. The first resonant inductor 411 is connected with a middle point between the first transistor M1 and the second transistor M2 through the blocking capacitor C3. The second resonant inductor 412 is connected with a middle point between the third transistor M3 and the fourth transistor M4.

The transformer 5 includes a primary winding 51 and a secondary winding 52. Two ends of the primary winding 51 are connected with the first resonant inductor 411 and the second resonant inductor 412, respectively. The rectifier circuit 6 circuit includes a fourth bridge arm 61, a fifth bridge arm 62, a sixth bridge arm 63, and a first rectifier capacitor C5. The fourth bridge arm 61 includes two first rectifier transistors M5, M6. The two first rectifier transistors M5, M6 are connected in series. The fifth bridge arm 62 includes two second rectifier transistors M7, M8. The two second rectifier transistors M7, M8 are connected in series. The sixth bridge arm 63 includes two second rectifier capacitors C6, C7. The two second rectifier capacitors C6, C7 are connected in series. The first rectifier capacitor C5 is connected between one end of the secondary winding 52 and a middle point between the two first rectifier transistors M5, M6 of the fourth bridge arm 61. The other end of the secondary winding 52 is connected with a middle point between the second rectifier transistors M7, M8 of the fifth bridge arm 62. In the embodiment, the first rectifier capacitor C5 serves as a blocking capacitor of the rectifier circuit 6. The two second rectifier capacitors C6, C7 serve as DC bulk capacitors.

In this embodiment, a balancing condition is met when a first ratio between two inductances of the DC common mode choke and the first resonant inductor 411 and a second ratio between capacitances of the at least two parasitic components are equal. The detailed description will be described below.

According to the equivalent circuit of the resonant converter 1, as shown in FIG. 2A, there are two loops produced in the circuit. The two loops partially circulate the common mode current between the resonant tank 4 and the rectifier circuit 6. In the equivalent circuit of FIG. 2A, the resonant tank 4 is equivalent to two voltage sources V2inv, V3inv. According to superposition principle, to understand the effect of each voltage source. The voltage source V2inv is maintained, and the other voltage source V3inv is shorted resulting in an exemplary circuit in FIG. 2B. As shown in FIG. 2B, according to superposition principle, a natural circulating loop is produced within the resonant converter 1. Similarly, when the voltage source V3inv is maintained, and the other voltage source V2inv is shorted, resulting in a natural circulating loop too. Considering the superposition principle, in the equivalent circuits of FIGS. 2A and 2B, the noise sources of the rectifier side thereof are both shorted.

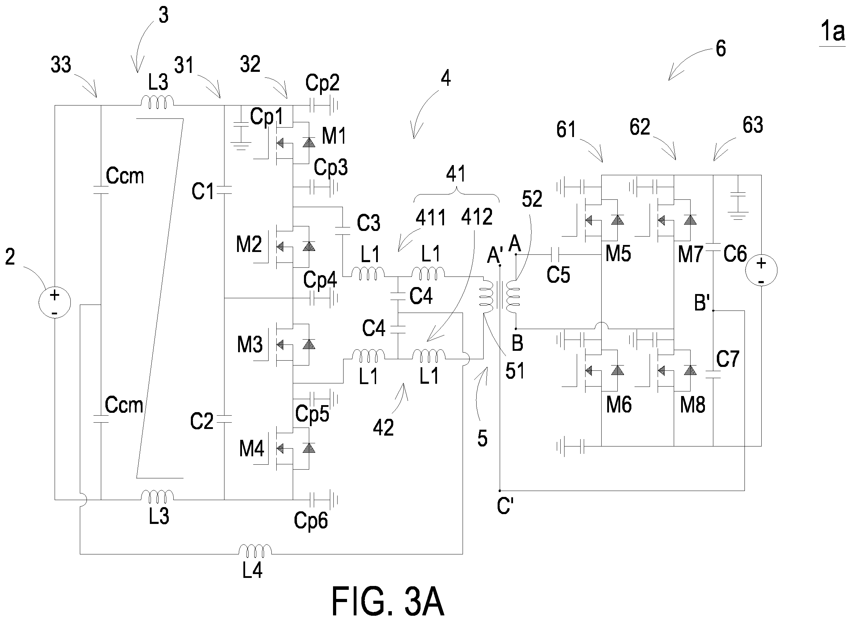

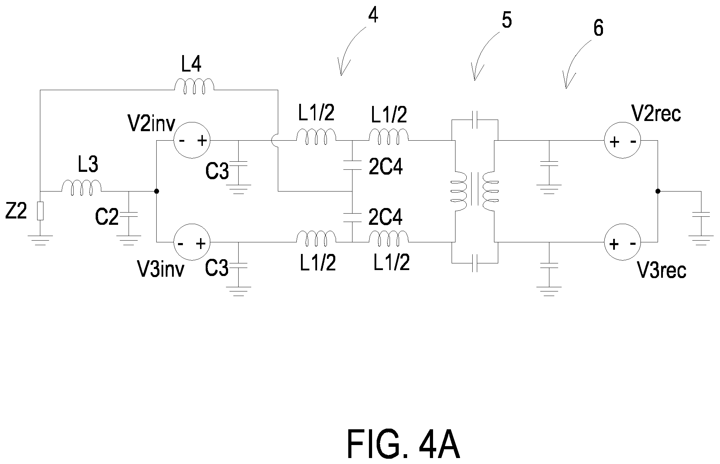

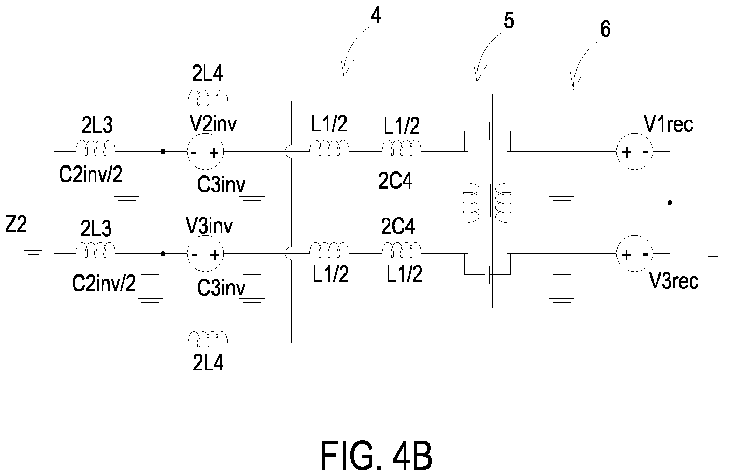

FIG. 3A is a schematic circuit diagram illustrating a resonant converter according to a second embodiment of the present disclosure. FIG. 4A and 4B are schematic equivalent circuit diagrams illustrating the resonant converter of FIG. 3A. The resonant converter 1a of this embodiment is similar to the resonant converter 1 of FIG. 1. In this embodiment, as shown in FIG. 3A, the resonant converter 1a includes a DC common mode choke 3, and the DC common mode choke 3 of the resonant converter 1a further includes a third bridge arm 33, a first common mode inductor L3, a second common mode inductor L3, and a third common mode inductor L4. The third bridge arm 33 is connected with the power source 2 in parallel and includes two common mode capacitors Ccm. The two common mode capacitors Ccm are connected in series. The first common mode inductor L3 is connected between a first end of the third bridge arm 33 and the first end of the first bridge arm 31. The second common mode inductor L3 is connected between a second end of the third bridge arm 33 and the second end of the first bridge arm 31. One end of the third common mode inductor L4 is connected in a middle point between the two common mode capacitors Ccm. The other end of the third common mode inductor L4 is connected in a middle point between the two resonant capacitors C4. In this embodiment, the common mode current produced from secondary winding 52 is circulated within the rectifier circuit 6. That ensures low inter-winding capacitance between the primary winding 51 and the secondary winding 52 of the transformer 5.

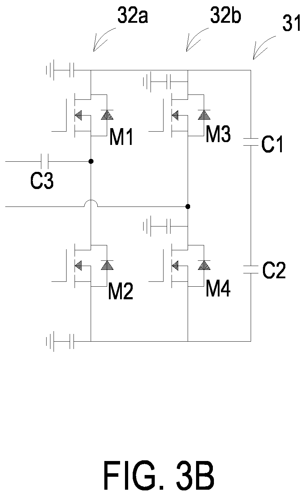

In some embodiments, the circuit structure of the DC common mode choke, the inverter, the resonant tank, the transformer, and the rectifier circuit can be adjusted. In an embodiment, the circuit structure of the DC common mode choke can be replaced by the full bridge similar to the rectifier circuit 6 of FIG. 3A. As shown in FIG. 3B, compared to the inverter of FIG. 3A including two bridge arms, the inverter includes a first bridge arm 31 and two second bridge arms 32a, 32b. The first bridge arm 31 of this embodiment is similar to the first bridge arm 31 of FIG. 3A. The second bridge arms 32a includes a first transistor M1 and a second transistor M2. The first transistor M1 and the second transistor M2 are connected in series. The second bridge arms 32b includes a third transistor M3 and a fourth transistor M4. The third transistor M3 and the fourth transistor M4 are connected in series. The blocking capacitor C3 is connected with a middle point between the first transistor M1 and the second transistor M2 of the second bridge arms 32a.

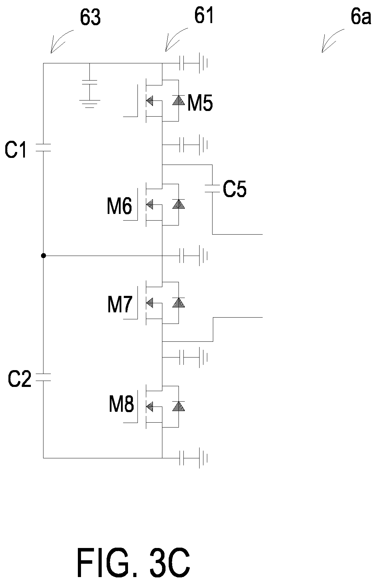

In an embodiment, the circuit structure of the rectifier circuit can be replaced by the stacked half bridge similar to the DC common mode choke of FIG.3A. As shown in FIG. 3C, compared to the rectifier circuit 6 of FIG. 3A including three bridge arms, the rectifier circuit 6a only includes the fourth bridge arm 61 and the sixth bridge arm 63. The fourth bridge arm 61 includes two first rectifier transistors M5, M6 and two second rectifier transistors M7, M8. The first rectifier transistors M5, M6 and the two second rectifier transistors M7, M8 are connected in series. The sixth bridge arm 63 is similar to the sixth bridge arm 63 of the rectifier circuit 6 of FIG. 3A.

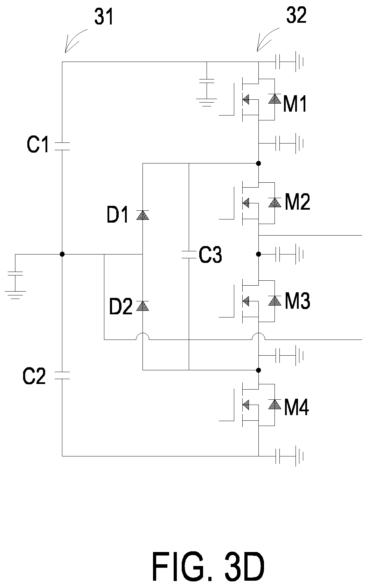

In an embodiment, the circuit structure of the DC common mode choke and/or the rectifier circuit can be replaced by the diode-clamped neutral-point clamped flying capacitor circuit (DNPC & FC), respectively. As shown in FIG. 3D, compared to the inverter of FIG. 3A, the inverter further includes two diodes D1, D2. The two diodes D1, D2 are connected in series. The cathode of the diode D1 is connected with a middle point between the third transistor M3 and the fourth transistor M4 of the second bridge arm 32. The anode of the diode D2 is connected with a middle point between the third transistor M3 and the fourth transistor M4 of the second bridge arm 32. One end of the blocking capacitor C3 is connected with the middle point between the third transistor M3 and the fourth transistor M4 of the second bridge arm 32, and the other end of the blocking capacitor C3 is connected with the middle point between the third transistor M3 and the fourth transistor M4 of the second bridge arm 32. Similarly, circuit structure of the rectifier circuit can be replaced by the diode-clamped neutral-point clamped flying capacitor circuit (DNPC & FC), and is not redundantly described hereinafter.

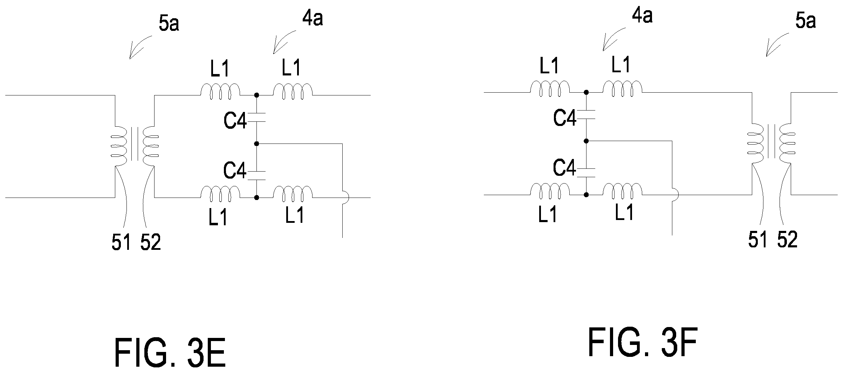

In an embodiment, the circuit structure of the resonant tank and the transformer can be adjusted. As shown in FIG. 3E, one end of the primary winding 51 of the transformer 5a is connected with the middle point between the first transistor M1 and the second transistor M2, and the other end of the primary winding 51 of the transformer 5a is connected with the middle point between the third transistor M3 and the fourth transistor M4. The resonant tank 4a is connected between the secondary winding 52 of the transformer 5a and the rectifier circuit 6. The middle point of the two resonant capacitors C4 is connected with the point B'. In some embodiments, the resonant tank 4a is connected between the primary winding 51 of the transformer 5a and the converter, as shown in FIG. 3F.

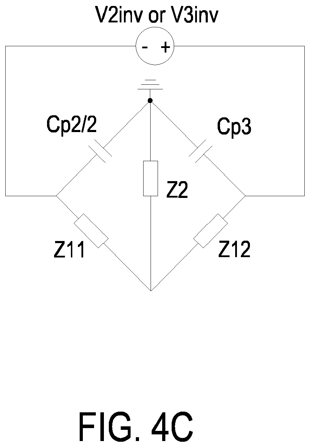

According to the equivalent circuit of the resonant converter 1a, as shown in FIG. 4A and 4B, there are two independent circuits. Each independent circuit can be reduced independently into an equivalent Wheatstone bridge, as shown in FIG. 4C. FIG. 4C is a schematic Wheatstone bridge equivalent circuit diagrams illustrating the resonant converter of FIG. 3A. According to FIG. 4C, equivalent Wheatstone bridge of the resonant converter 1a includes the voltage source V2inv (or V3inv), half of the second parasitic component Cp2, the third parasitic component Cp3, a first impedance Z11, a second impedance Z12 and a LISN (line impedance stabilization network) impedance Z2. FIG. 4C is obtained from the vector network analyzer (VNA) measurements using S or Z parameters and further post processing. In this circuit, the following formula (1) is existed.

$$\frac{Z11}{Z12} = \frac{jL_3\omega}{\frac{-j}{(2C_4||C_{cm})\omega} + j2L_4\omega + \frac{jL_1\omega}{2}} = \frac{C_{3,inv}}{C_{2,inv}} \dots (1)$$

$C_{3,inv}$ is capacitance of the third parasitic component Cp3. $C_{2,inv}$ is capacitance of the second parasitic component Cp2. $L_3$ is inductance of the first common mode inductor L3. $L_4$ is inductance of the third common mode inductor L4. $L_1$ is inductance of the resonant inductors L1. $C_4$ is capacitance of the resonant capacitors C4. $C_{cm}$ is capacitance of the capacitor.

In the formula (1), the denominator must be purely inductive for canceling independent of the frequency according to the following formula (2).

$$f_{series} = \frac{1}{2\pi\sqrt{(\frac{L_1}{2} + 2L_4)(2C_1||C_{cm})}} < f_{min} \dots (2)$$

$f_{series}$ is frequency of the resonant converter 1a. $f_{min}$ is start frequency of EMC spectrum. The reduced expression of formula (2) is the following formula (3).

$$\frac{L_3}{\frac{L_1}{2} + 2L_4} = \frac{C_{3,inv}}{C_{2,inv}} \dots (3)$$

Namely, in this embodiment, the first ratio is between a first inductance of the first common mode inductor L3 and a second inductance combined with one of the two resonant inductors L1 and twice of the third common mode inductor L4. The second ratio is between capacitances of the third parasitic component Cp3 and the second parasitic component Cp2.

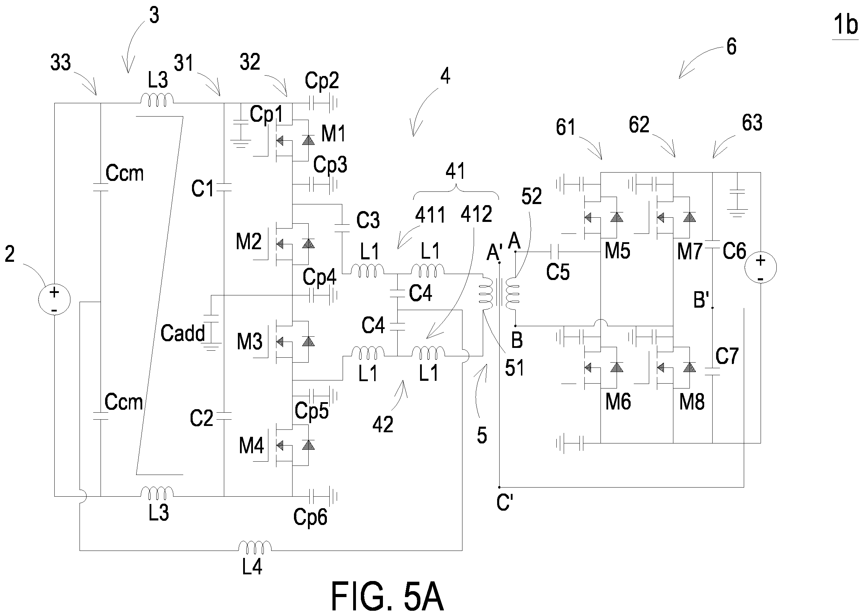

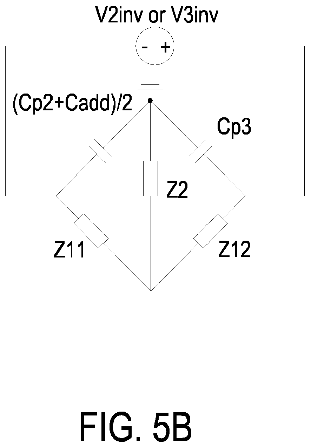

FIG. 5A is a schematic circuit diagram illustrating a resonant converter according to a third embodiment of the present disclosure. FIG. 5B is a schematic Wheatstone bridge equivalent circuit diagrams illustrating the resonant converter of FIG. 5A. In this embodiment, the inverter of the resonant converter 1b further includes an additional capacitor Cadd. The additional capacitor Cadd is connected to a middle point between the two capacitors C1, C2 for allowing better control over the balancing criterion. In this embodiment, the additional capacitor Cadd is an external capacitor which can control the balancing criterion very well. With the additional capacitor Cadd in the circuit, the value of second common mode inductor L3 can be reduced, resulting in lower turns and lower impact of equivalent parallel capacitance.

In the formula (4), $C_{add}$ is capacitance of an additional capacitor Cadd.

$$\frac{jL_3\omega}{\frac{-j}{(2C_1||C_{cm})\omega} + j2L_4\omega + \frac{jL_1\omega}{2}} = \frac{C_3}{C_2 + C_{add}} \ldots (4)$$

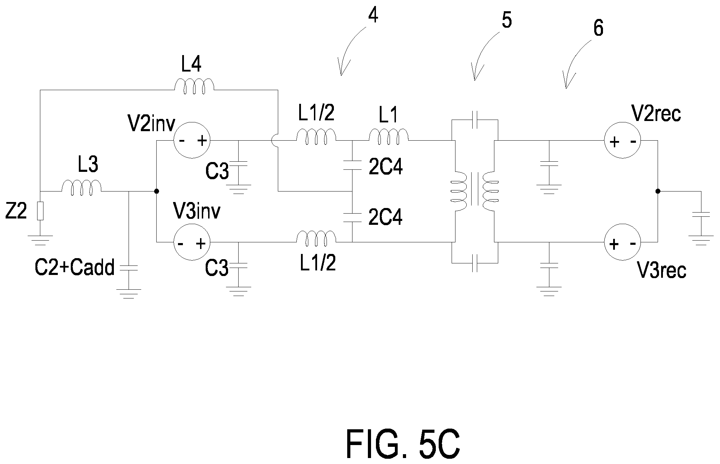

FIG. 5C is schematic equivalent circuit diagram illustrating a resonant converter according to a fourth embodiment of the present disclosure. In this embodiment, one of the resonant inductors L1 is a single core and does not to be split. Namely, one the two resonant inductors L1 of the first resonant inductor 411 and one of the two resonant inductors L1 of the second resonant inductor 412 are formed in a single core. The equivalent parallel capacitance of the resonant inductor L1 which is not being split is small as long as the inter-winding capacitance of the transformer 5 is small.

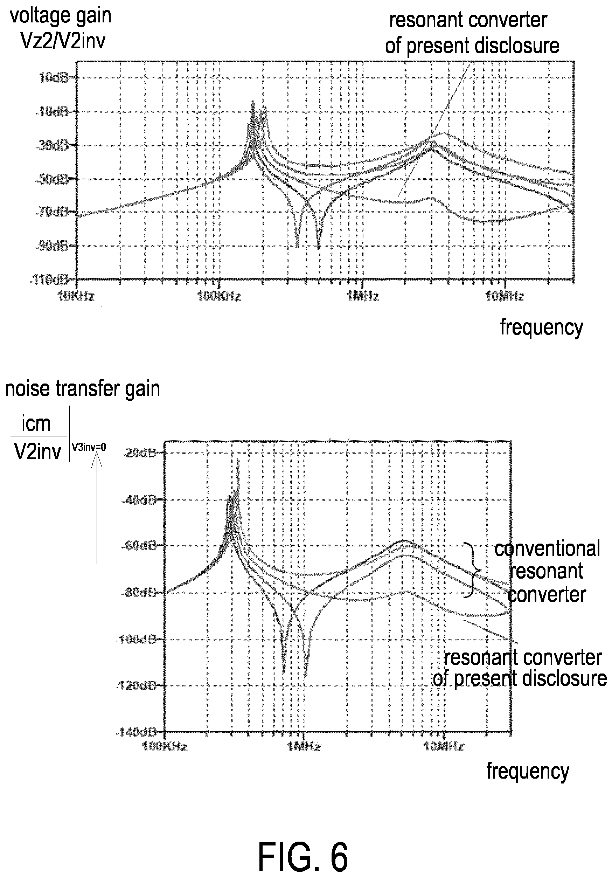

FIG. 6 is schematic waveform diagram of the voltage gain and the frequency of the resonant converter of the present disclosure and the conventional resonant converter. As shown in FIG. 6, the voltage gain at the LISN impedance Z2 depends on the circuit parameters and yields the lowest values when the balancing condition is met. Namely, the noise propagation towards the LISN impedance Z2 is the smallest when the resonant converter 1a is balanced.

Please refer to FIG. 3A again. In this embodiment, the resonant converter 1a further includes a shielding connection structure 7 for reducing the parasitic capacitance between the primary winding 51 and the secondary winding 52 of the transformer 5. The shielding connection structure 7 is connected between the secondary winding 52 of the transformer 5 and a middle point between the two second rectifier transistors M7, M8 of the sixth bridge arm 63.

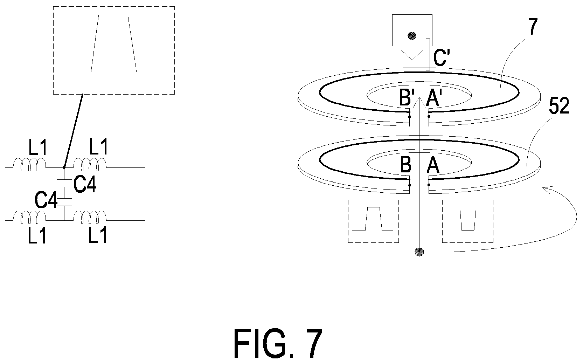

FIG. 7 is schematic waveform diagram of the voltage and current direction of partial structure of the resonant converter of FIG. 3A. As shown in FIGS. 3 and 7, the point A is represented as one end of the secondary winding 52 of the transformer 5, and the point B is represented as the other end of the secondary winding 52 of the transformer 5. The point A' is represented as one end of the shielding connection structure 7 connected with the secondary winding 52 of the transformer 5. The point B' is represented as the other end of the shielding connection structure 7 connected with the middle point between the two second rectifier capacitors C6, C7. The point C' is represented as the middle point between the point A' and the point B'. According to FIG. 7, the voltage waveform of the point A is similar to the voltage waveform of the middle point between the two resonant inductors L1 of the first resonant inductor 411, and the voltage waveform of the point B is opposite to the voltage waveform of the middle point between the two resonant inductors L1 of the first resonant inductor 411.

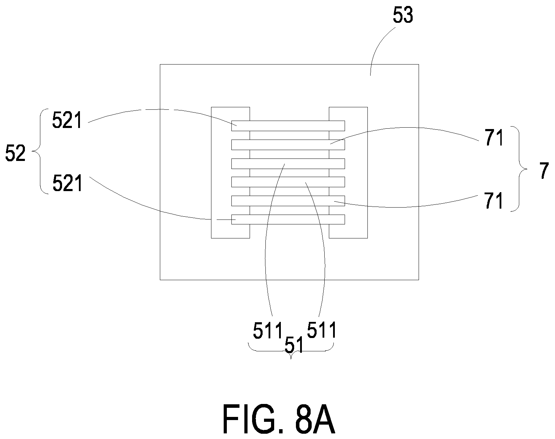

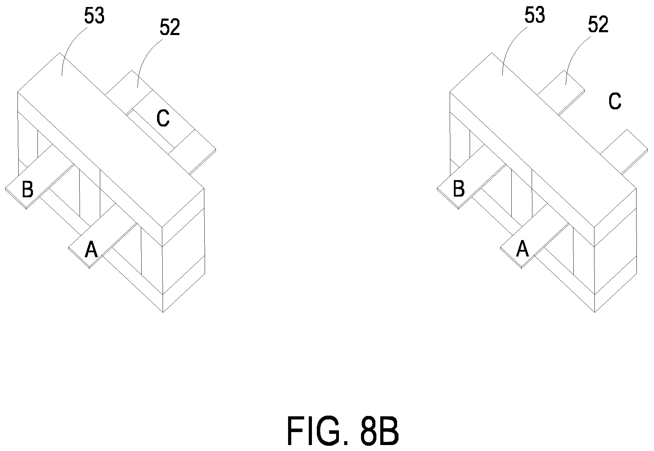

FIG. 8A and 8B are realistic structures of the transformer and the shielding connection structure of the resonant converter of FIG. 3A. As shown in FIGS. 3, 8A and 8B, the transformer 5 includes the primary winding 51, the secondary winding 52 and an E-shape core 53. The primary winding 51 includes two sub primary windings 511 disposed around the middle core part of the E-shape core 53. The secondary winding 52 includes two sub secondary windings 521 disposed around the middle core part of the E-shape core 53. The shielding connection structure 7 includes two sub shielding connection structures 71 disposed around the middle core part of the E-shape core 53. As shown in FIG. 8A, the two sub primary windings 511 is disposed between the two sub shielding connection structures 71. Each sub shielding connection structure 71 is disposed between the corresponding sub primary winding 511 and the corresponding sub secondary winding 521. In this embodiment, the turns ratio of the primary winding 51 and the secondary winding 52 is 1:1. As shown in FIG. 8B, according to the FEA simulation of the secondary winding 52, the voltage of the secondary winding 52 between the point A and the point C is half of the voltage of the secondary winding 52 between the point A and the point B. Clearly, the voltage is equally distributed between the two split windings and is equal to half of the total voltage of the secondary winding 52. Consequently, the shielding connection structure 7 is also terminated halfway between the point A' and the point B'. It ensures an equal linear voltage drop between the secondary winding 52 and the shielding connection structure 7, thereby resulting in zero net dv/dt across the shielding connection structure 7 and secondary winding 52. Consequently, it decouples the rectifier circuit 6 from the resonant tank 4 end resulting in zero common mode current propagation towards the secondary winding 52 and the rectifier circuit 6.

The present disclosure discusses about the planar PCB winding configuration, a Litz version is also compatible with the current disclosure. In fact, the Litz transformer version would not require additional shielding efforts as it exhibits lower inter-winding capacitances which can decouple the effects of the rectifier circuit from the inverter.

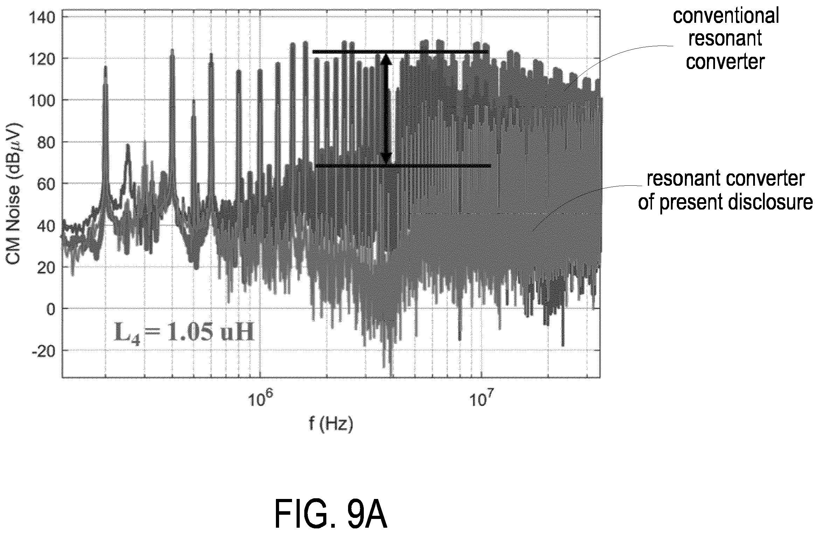

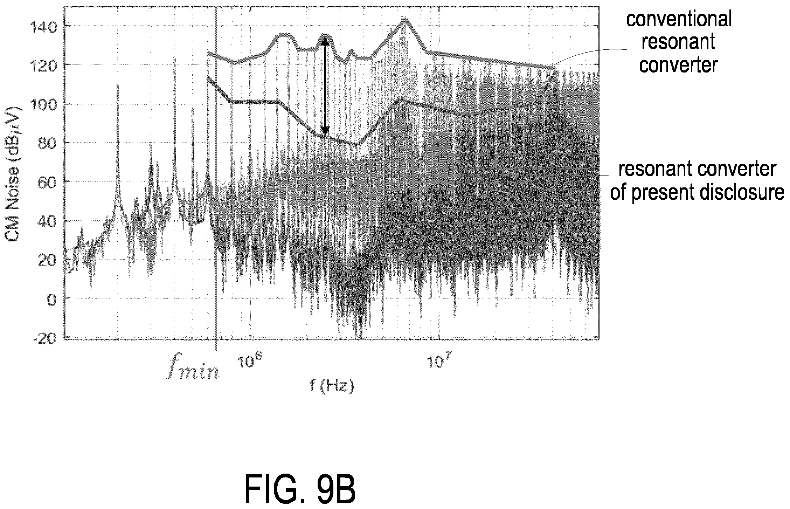

FIGS. 9A and 9B are schematic noise waveform diagrams of the resonant converter of the present disclosure and the conventional resonant converter. In this embodiment, the input voltage is 800V, the output voltage is 400V, the inductance of the resonant inductors L1 is 7.4uH, the capacitance of the resonant capacitors C4 is 13.8F, the resonant frequency of the resonant converter 1 is 500 kHz, the capacitance of the third parasitic component Cp3 is 150 pF, the capacitance of the second parasitic component Cp2 is 450 pF, the capacitance of the common mode capacitor Ccm is 500 nF, the inductance of the third common mode inductor L4 is 1.05 uH, wherein the capacitance of the common mode capacitor Ccm is much greater than the capacitance of the resonant capacitors C4. According to FIGS. 9A and 9B, the noise emission of the resonant converter of the present embodiment is less than the noise emission of the conventional resonant converter.

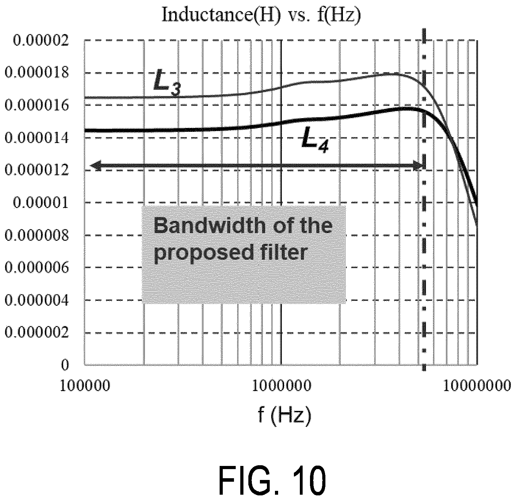

FIG. 10 is schematic frequency waveform diagram of the inductor of the resonant converter of the present disclosure. In this embodiment, a set of PQ-40/40 ferrite cores with permeability of 5000 at 10 kHz is used to build the first common mode inductor L3 and the third common mode inductor L4. The inductance of the first common mode inductor L3 is 15.7uH, the inductance of the third common mode inductor L4 is 13.8uH. The first common mode inductor L3 and the third common mode inductor L4 were constructed to maintain the balanced ratio of 0.5 over a wide frequency range starting from 100 kHz to 5 MHz. The capacitance of the third parasitic component Cp3 is half of the capacitance of the second parasitic component Cp2. in this embodiment, the capacitance of the third parasitic component Cp3 is 37.5pF, the capacitance of the second parasitic component Cp2 is 75pF. The frequency of the resonant converter is 182kHz. As shown in FIG. 10, the inductance of the first common mode inductor L3 and the inductance of the third common mode inductor L4 sharply drop beyond 5 MHz according to the non-linear permeability effects and fringing fields become more prominent. In some embodiments, the structure of first common mode inductor L3 and the third common mode inductor L4 has air gap for enhancing the bandwidth and increasing the range of the linear inductive region.

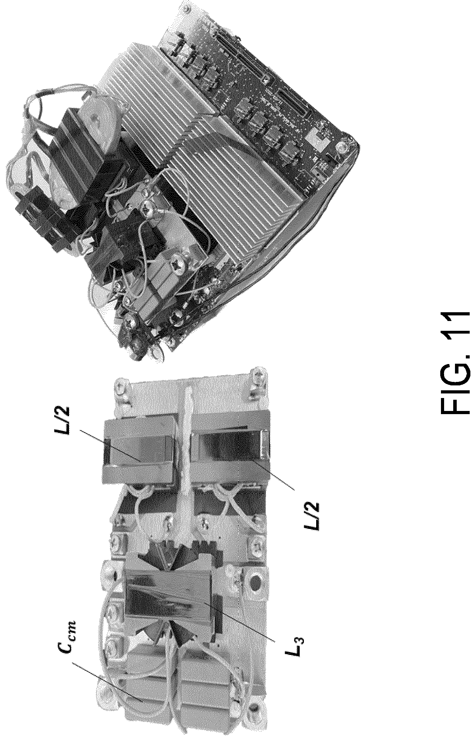

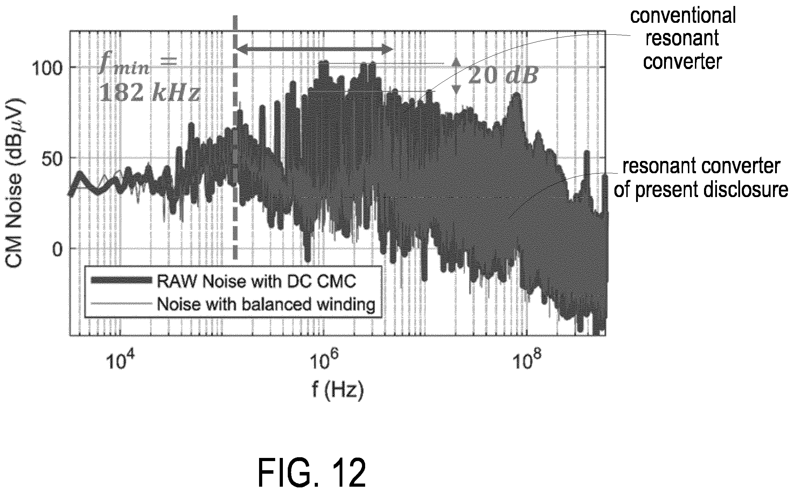

FIG. 11 is realistic structure of the resonant converter of the present disclosure. FIG. 12 is schematic waveform diagram of the common mode noise of the resonant converter of the present disclosure and the conventional resonant. As shown in FIG. 12, the noise measurement is conducted on a low voltage platform. In the mid frequency range between 120 kHz to 3 MHz, the measured noise spectrum of the resonant converter of the present disclosure is 20 dB reduction lower than the measured noise spectrum of the conventional resonant converter.

It is noted that in the present disclosure, the capacitive component includes, but is not limited to, a specific discrete capacitor or a parasitic capacitor inherent in the circuit or its components.

As mentioned above, according to the resonant converter of the present disclosure, the resonant tank is a symmetrical structure and includes a resonant inductor group and a resonant capacitor group. The structure of the inductor of the resonant inductor group and the capacitor of the resonant capacitor group are symmetrical. The balancing condition is met when a first ratio between two inductances of the DC common mode choke and the first resonant inductor and a second ratio between capacitances of the at least two parasitic components are equal. The resonant converter has advantage of reducing the noise emission and the volume and increasing the power density and the efficiency. Moreover, the resonant converter of the present disclosure includes a shielding connection structure. Consequently, it decouples the rectifier circuit from the resonant tank end resulting in zero common mode current propagation towards the secondary winding and the rectifier circuit.

## Claims

1. A resonant converter (1, 1a, 1b) for converting an input voltage from a power source (2) to an output voltage, **characterized by** comprising:

   a DC common mode choke (3) comprising at least two capacitive components (Cp1, Cp2, Cp3, Cp4, Cp5, Cp6); and
   a resonant tank (4, 4a) connected with the DC common mode choke (3), and comprising:

   a resonant inductor group (41), wherein the resonant inductor group (41) comprises a first resonant inductor (411) and a second resonant inductor (412), the first resonant inductor (411) and the second resonant inductor (412) are equal; and
   a resonant capacitor group (42), wherein a first side of the resonant capacitor group (42) is connected with the first resonant inductor (411), a second side of the resonant capacitor group (42) is connected with the second resonant inductor (412), wherein the resonant capacitor group (42) comprises two resonant capacitors (C4) in series;
   wherein a balancing condition is met when a first ratio between two inductances of the DC common mode choke (3) and the first resonant inductor (411) and a second ratio between capacitances of the at least two capacitive components (Cp1, Cp2, Cp3, Cp4, Cp5, Cp6) are equal.

2. The resonant converter (1, 1a, 1b) according to claim 1, wherein the resonant tank (4, 4a) is configured to be a symmetrical structure, the first resonant inductor (411) and the second resonant inductor (412) comprise two resonant inductors (L1), respectively, the first side of the resonant capacitor group (42) is connected with a middle point between the two resonant inductors (L1) of the first resonant inductor (411), the second side of the resonant capacitor group (42) is connected with a middle point between the two resonant inductors (L1) of the second resonant inductor (412).

3. The resonant converter (1, 1a, 1b) according to claim 2, wherein the DC common mode choke (3) comprises a first bridge arm (31) and a second bridge arm (32), the first bridge arm (31) is connected with the power source (2) in parallel and comprise two capacitors (C1, C2) connected in series, the second bridge arm (32) is connected with the first bridge arm (31) in parallel and comprises four transistors (M1, M2, M3, M4), wherein the four transistors (M1, M2, M3, M4) are connected in series.

4. The resonant converter (1, 1a, 1b) according to claim 3, wherein the at least two capacitive components (Cp1, Cp2, Cp3, Cp4, Cp5, Cp6) comprise a first capacitive component (Cp1), a second capacitive component (Cp2), a third capacitive component (Cp3), a fourth capacitive component (Cp4), a fifth capacitive component (Cp5) and a sixth capacitive component (Cp6), wherein the first capacitive component (Cp1) and the second capacitive component (Cp2) are connected with a first end of the first bridge arm (31) and a first transistor (M1) of the four transistors (M1, M2, M3, M4), the third capacitive component (Cp3) is connected between the first transistor (M1) and a second transistor (M2) of the four transistors (M1, M2, M3, M4), the fourth capacitive component (Cp4) is connected between the second transistor (M2) and a third transistor (M3) of the four transistors (M1, M2, M3, M4), the fifth capacitive component (Cp5) is connected between the third transistor (M3) and a fourth transistor (M4) of the four transistors (M1, M2, M3, M4), the sixth capacitive component (Cp6) is connected with a second end of the first bridge arm (31) and the fourth transistor (M4), wherein the first resonant inductor (411) is connected with a middle point between the first transistor (M1) and the second transistor (M2), and the second resonant inductor (412) is connected with a middle point between the third transistor (M3) and the fourth transistor (M4).

5. The resonant converter (1a, 1b) according to claim 4, wherein the DC common mode choke (3) comprises a third bridge arm (33), a first common mode inductor (L3), a second common mode inductor (L3) and a third common mode inductor (L4), wherein the third bridge arm (33) is connected with the power source (2) in parallel and comprises two common mode capacitors (Ccm) connected in series, wherein the first common mode inductor (L3) is connected between a first end of the third bridge arm (33) and the first end of the first bridge arm (31), the second common mode inductor (L3) is connected between a second end of the third bridge arm (33) and the second end of the first bridge arm (31), one end of the third common mode inductor (L4) is connected in a middle point between the two common mode capacitors (Ccm), and the other end of the third common mode inductor (L3) is connected in a middle point between the two resonant capacitors (C4).

6. The resonant converter (1a, 1b) according to claim 5, wherein the first ratio is between a first inductance of the first common mode inductor (L3) and a second inductance combined with one of the two resonant inductors (L1) and twice of the third common mode inductor (L4).

7. The resonant converter (1a, 1b) according to claim 6, wherein the second ratio is between capacitances of the third capacitive component (Cp3) and the second capacitive component (Cp2).

8. The resonant converter (1a, 1b) according to claim 6 or 7, wherein the DC common mode choke (3) comprises two diodes (D1, D2) and a blocking capacitor (C3), the two diodes (D1, D2) are connected in series, one end of the two diodes (D1, D2) and one end of the blocking capacitor (C3) are connected between the first transistor (M1) and the second transistor (M2), the other end of the two diodes (D1, D2) and the other end of the blocking capacitor (C3) are connected between the third transistor (M3) and the fourth transistor (M4).

9. The resonant converter (1b) according to any one of claims 3 to 8, wherein the DC common mode choke (3) comprises an additional capacitor (Cadd), wherein the additional capacitor (Cadd) is connected to a middle point between the two capacitors (C1, C2).

10. The resonant converter (1, 1a, 1b) according to any one of claims 2 to 9, wherein the DC common mode choke (3) comprises a first bridge arm (31) and two second bridge arms (32a, 32b), the first bridge arm (31) is connected with the power source (2) in parallel and comprise two capacitors (C1, C2) connected in series, the two second bridge arms (32a, 32b) are connected with the first bridge arm (31) in parallel, each of the two second bridge arm (32a, 32b) comprises two transistors (M1, M2, M3, M4), wherein the two transistors (M1, M2, M3, M4) are connected in series.

11. The resonant converter (1, 1a, 1b) according to any one of the above claims, wherein the resonant converter (1, 1a, 1b) comprises a transformer (5), the transformer (5) comprises a primary winding (51) and a secondary winding (52), two ends of the primary winding (51) are connected with the first resonant inductor (411) and the second resonant inductor (412), respectively, wherein the resonant converter (1, 1a, 1b) comprises a rectifier circuit (6), the rectifier circuit (6) comprises a fourth bridge arm (61), a fifth bridge arm (62), a sixth bridge arm (63) and a first rectifier capacitor (C5), the fourth bridge arm (61) comprises two first rectifier transistors (M5, M6) connected in series, the fifth bridge arm (62) comprises two second rectifier transistors (M7, M8) connected in series, the sixth bridge arm (63) comprises two second rectifier capacitors (C6, C7) connected in series, wherein the first rectifier capacitor (C5) is connected between one end of the secondary winding (52) and a middle point between the two first rectifier transistors (M5, M6) of the fourth bridge arm (61), the other end of the secondary winding (52) is connected with a middle point between the second rectifier transistors (M7, M8) of the fifth bridge arm (62).

12. The resonant converter (1, 1a, 1b) according to claim 11, wherein the resonant converter (1, 1a, 1b) comprises a transformer (5), the transformer (5) comprises a primary winding (51) and a secondary winding (52), two ends of the primary winding (51) are connected with the first resonant inductor (411) and the second resonant inductor (412), respectively, wherein the resonant converter (1, 1a, 1b) comprises a shielding connection structure (7) connected between the secondary winding (52) of the transformer (5) and a middle point between the two second rectifier transistors (M7, M8) of the sixth bridge arm (63).

13. The resonant converter (1, 1a, 1b) according to any one of the above claims, wherein the resonant converter (1, 1a, 1b) comprises a transformer (5), the transformer (5) comprises a primary winding (51) and a secondary winding (52), two ends of the primary winding (51) are connected with the first resonant inductor (411) and the second resonant inductor (412), respectively, wherein the resonant converter (1, 1a, 1b) comprises a rectifier circuit (6a), the rectifier circuit (6a) comprises a fourth bridge arm (61), a sixth bridge arm (63) and a first rectifier capacitor (C5), the fourth bridge arm (61) comprises two first rectifier transistors (M5, M6) and two second rectifier transistors (M7, M8) connected in series, the sixth bridge arm (63) comprises two second rectifier capacitors (C6, C7) connected in series, wherein the first rectifier capacitor (C5) is connected with a middle point between the two first rectifier transistors (M5, M6) of the fourth bridge arm (61), the other end of the secondary winding (52) is connected with a middle point between the second rectifier transistors (M7, M8) of the fourth bridge arm (61).

14. The resonant converter (1, 1a, 1b) according to any one of the above claims, wherein the resonant converter (1, 1a, 1b) comprises a transformer (5a), the transformer (5a) comprises a primary winding (51) and a secondary winding (52), two ends of the primary winding (51) are connected with DC common mode choke (3), and two ends of the secondary winding (52) are connected with the resonant tank (4a).

15. The resonant converter (1, 1a, 1b) according to any one of the above claims, wherein the first resonant inductor (411) and the second resonant inductor (412) comprise two resonant inductors (L1), respectively, one of the two resonant inductors (L1) of the first resonant inductor (411) and one of the two resonant inductors (L1) of the second resonant inductor (412) are formed in a single core, wherein the at least two capacitive components (Cp1, Cp2, Cp3, Cp4, Cp5, Cp6) are parasitic capacitors.

FIG. 1

EP 4 664 741 A1

FIG. 2A

FIG. 2B

FIG. 3A

FIG. 3B

FIG. 3C

FIG. 3D

EP 4 664 741 A1

FIG. 3E

FIG. 3F

FIG. 4A

**FIG. 4B**

FIG. 4C

FIG. 5A

V2inv or V3inv

(Cp2+Cadd)/2

Cp3

Z2

Z12

Z11

FIG. 5B

FIG. 5C

EP 4 664 741 A1

FIG. 6

FIG. 7

FIG. 8A

FIG. 8B

FIG. 9A

FIG. 9B

FIG. 10

FIG. 11

FIG. 12

Europäisches
Patentamt

European
Patent Office

Office européen
des brevets

# EUROPEAN SEARCH REPORT

**Application Number**

EP 25 18 2700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DIANBO FU ET AL: "Novel techniques to suppress the common mode EMI noise caused by transformer parasitic capacitances in DC-DC converters", ENERGY CONVERSION CONGRESS AND EXPOSITION (ECCE), 2010 IEEE, IEEE, PISCATAWAY, NJ, USA, 12 September 2010 (2010-09-12), pages 1252-1259, XP031787037, ISBN: 978-1-4244-5286-6 * page 1257 - page 1259; figures 21-28 * | 1-15 | INV.<br>H02M1/12<br>H02M1/44<br>H02M3/00<br>H02M7/48 |
| A | LIU YUE ET AL: "Overview of Planar Magnetics for High-frequency Resonant Converters", CHINESE JOURNAL OF ELECTRICAL ENGINEERING, vol. 8, no. 4, 1 December 2022 (2022-12-01), pages 61-78, XP093187048, ISSN: 2096-1529, DOI: 10.23919/CJEE.2022.000039 * pages 71-73; figures 23-27 * | 1-15 | |
| T | PHUKAN RIPUN ET AL: "Symmetrical Balanced Circuit for Common-Mode Noise Mitigation in LCL-T Resonant Converter", 2025 IEEE APPLIED POWER ELECTRONICS CONFERENCE AND EXPOSITION (APEC), IEEE, 16 March 2025 (2025-03-16), pages 2296-2302, XP034902678, DOI: 10.1109/APEC48143.2025.10977279 [retrieved on 2025-05-01] | 1-15 | **TECHNICAL FIELDS SEARCHED (IPC)**<br><br>H02M |

The present search report has been drawn up for all claims

| Place of search | Date of completion of the search | Examiner |
|---|---|---|
| The Hague | 2 October 2025 | Gusia, Sorin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document